# EUROPEAN PATENT SPECIFICATION

(11) **EP 1 431 085 B1**
(45) Date of publication and mention of the grant of the patent: **27.10.2010**
(21) Application number: 03104691.5
(22) Date of filing: 15.12.2003
(51) Int. Cl.: B60H 1/00

(54) **A refrigeration circuit of an air-conditioning system for a motor vehicle**
Kühlkreislauf einer Klimaanlage für ein Kraftfahrzeug
Un circuit frigorifique d'un système de climatisation pour un véhicule automobile

(30) Priority: 17.12.2002 IT TO20021093
(43) Date of publication of application: 23.06.2004
(73) Proprietor: DYTECH - Dynamic Fluid Technologies S.p.A., 10123 Torino (IT)
(72) Inventor: Valentino, Francesco, 10086 Rivarolo Canavese (IT); Zanardi, Mariofelice, 10123 Torino (IT)
(74) Representative: Jorio, Paolo

(56) References cited:
- DE-A- 3 229 365
- DE-A- 19 849 103
- FR-A- 2 608 101

## Description

The present invention relates to a refrigeration circuit for an air-conditioning system, and in particular to a refrigeration circuit of a motor vehicle and to a corresponding method.

Nowadays, motor vehicles are frequently provided with an air-conditioning system which comprises a refrigeration circuit.

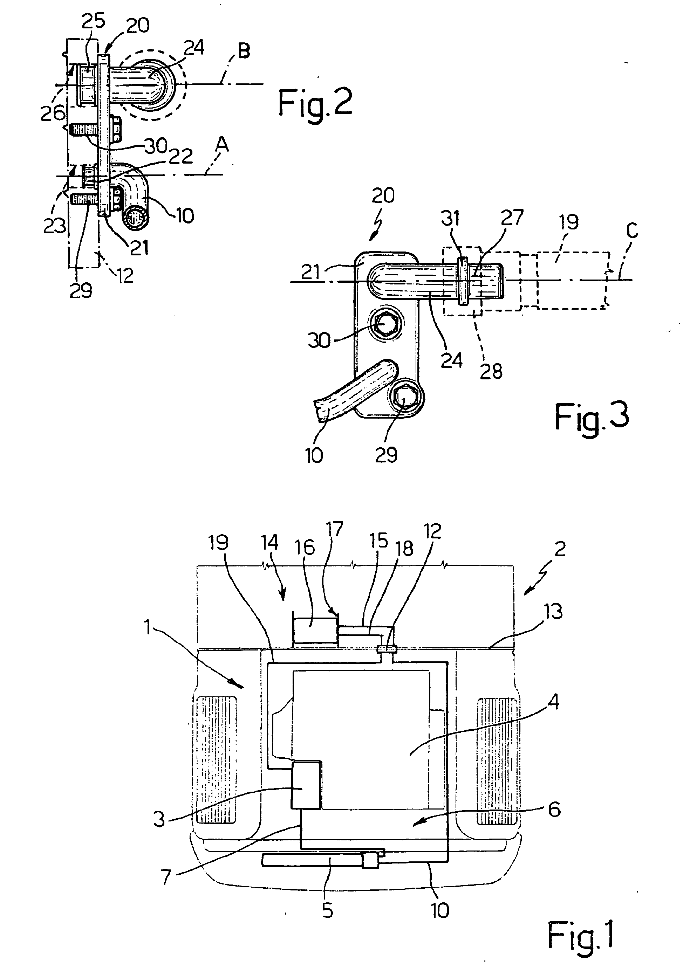

In detail, Figure 1 is a schematic representation of an air-conditioning system, designated by 1 of a conventional type for a motor vehicle.

The refrigeration circuit 1 includes a compressor 3, which is driven by the engine 4 of the motor vehicle 2 and is installed on the engine 4 itself. One outlet of the compressor 2 is connected to a condenser 5 set in the front part of an engine compartment 6 of the motor vehicle 2 by means of a high-pressure gas pipe 7. The outlet of the condenser 5 is connected by means of a liquid pipe 10 to an expansion valve 12 generally housed in the fire wall 13 set between the engine compartment 6 and the passenger compartment 14 of the motor vehicle.

The expansion valve 12 is connected, via a pipe 15, to an evaporator 16 housed at an air intake 17 of the passenger compartment, where there takes place thermal exchange with the air introduced into the passenger compartment itself, which is thus cooled. From the evaporator 16 the gas at low pressure is conveyed first to the expansion valve 12 by means of a feedback pipe 18, which has a function of controlling the expansion valve 12, and from this to the compressor 3 via an intake pipe 19 housed in the engine compartment 6.

During assembly of the motor vehicle, it is therefore necessary to make the connection of the expansion valve 12, mounted on the fire wall 13, with the liquid pipe 10 and with the intake pipe 19.

Generally, the assembly of the motor vehicle envisages first the installation of the components housed in the engine compartment and fixed to the bodywork, such as, for example the condenser 5, and subsequently the installation of the engine 4 with the auxiliary members carried pre-mounted thereon, such as, for instance, the compressor 3. After installation of the engine, the electrical and fluid connections between the various members must be made.

In the specific case, the condenser 5 and the liquid pipe 10 are mounted in the engine compartment 6 prior to installation of the engine 4, and hence the pipe for liquid may be conveniently connected to the expansion valve 12, for example by providing, on the end of the tube, a fixing flange, which is blocked on the expansion valve 12 using a screw after the end of the tube has been inserted in a liquid-tight way in a respective seat of the valve itself.

The intake pipe 19 must be connected to the expansion valve 12 after the engine 4 has been inserted in the engine compartment 6. According to a known embodiment, this operation is performed exactly according to what has been described previously for the liquid pipe 10, but it is somewhat inconvenient on account of the reduced spaces available between the engine 4 and the fire wall 13.

Alternatively, the connection both of the liquid pipe 10 and of the intake pipe 19 to the expansion valve 12 is obtained by previously fixing together the respective flanges of the two pipes, which are appropriately shaped so as to form, as a whole, a plate designed to be fixed to the expansion valve 12.

Furthermore, US3869153 discloses that a liquid pipe 10 and an in take pipe 19 are rigidly fixed to a compressor by a plate screwed on a wall of the compressor.

These solutions in any case require that the plate should be fixed to the expansion valve 12 or the compressor respectively after assembly of the engine and hence presents the same drawback as the one described above.

According to a third known embodiment, there is mounted on the expansion valve 12 a flange, which is provided, on one side, with pipe fittings for the expansion valve 12 and, on the opposite side, with two female fast-coupling elements, to which corresponding male fast-coupling elements carried by an end portion of the corresponding pipes 10 and 19 are connected by snap action. This latter operation may be carried out conveniently after installation of the engine.

This solution presents, however, the disadvantage of rendering necessary an additional element between the expansion valve 12 and the pipes 10, 19 and of consequently leading to four possible leakage points.

The purpose of the present invention is to obtain a connection assembly between an expansion valve of a refrigeration circuit of a motor vehicle and the respective pipes which will enable a simple and inexpensive solution to the problems referred to above and in particular ease of installation and, at the same time, containment of the risks of leakage of fluid.

According to the present invention, there is provided a refrigeration circuit of an air-conditioning system of a motor vehicle, comprising: a first pipe; a second pipe; a component of said circuit, provided with a pair of connection inlets; and connection means for connecting said first and second pipes to the respective said inlets of the said component, said connection means comprising a flange designed to be rigidly fixed to said component, said first pipe being rigidly fixed to said flange and having an end portion mounted so that it passes through said flange to engage a respective said inlet, said refrigeration circuit being **characterized in that** it comprises a pipe fitting, which is mounted so that it passes through said flange and comprises an end portion, which is designed to engage a respective said inlet of said component and, at an opposite end, a fast-coupling element for engagement with a corresponding fast-coupling element carried by said second pipe.

The present invention will now be described with reference to the annexed drawings, which illustrate a non-limiting example of embodiment and in which:
- Figure 1 is a diagram of a refrigeration circuit of an air-conditioning system for a motor vehicle;
- Figure 2 is a side view of a connection assembly of the refrigeration circuit illustrated in Figure 1, built according to the present invention; and
- Figure 3 is a front view of the connection assembly illustrated in Figure 2.

With reference to Figure 2, designated as a whole by 20 is a connection means for connection of a liquid pipe 10 and of an intake pipe 19 to an expansion valve 12 of a refrigeration circuit 1 of the type described previously and illustrated in Figure 1.

With reference in particular to Figures 2 and 3, the connection means comprises a flange 21, designed to be rigidly fixed to the expansion valve 12. The liquid pipe 10 has an end portion 22 with axis A, which is mounted so that it passes through a hole of the flange 21 (not illustrated) and is rigidly fixed to the flange 21, in a known way, for example by means of rolling or welding. The end portion 22 of the liquid pipe 10 is designed to engage a respective inlet 23 of the expansion valve 12, with the interposition of one or more seal gaskets of a known type (not illustrated either).

According to the present invention, the connection means 20 further comprises a tubular pipe fitting 24, which is mounted so that it passes through a second hole (not illustrated) of the flange 21 and comprises an end portion 25 facing the same side as the end portion 22, which has an axis B parallel to the axis A and is designed to engage a second inlet 26 of the expansion valve 12.

The pipe fitting 24, which is elbow-shaped, moreover comprises, at its opposite end, a fast-coupling element 27, which is designed to engage a corresponding fast-coupling element 28, carried by the intake pipe 19. The fast-coupling element 27, which is conveniently of a male type, has an axis C orthogonal to the axis B so as to face laterally, i.e., be parallel to, the flange 21 and hence to the fire wall 13, and thus to facilitate engagement of the fast-coupling element 28 when the engine 4 has been installed. The fast-coupling element 27 comprises an annular projection 31 obtained by plastic deformation on the pipe fitting 24, which has the function of mechanical retention in engagement with the fast-coupling element 28, of a female type, of the intake pipe 19.

The fast-coupling element 28 may be of any known type and is consequently not described herein.

The flange 21 is rectangular and is fixed to the expansion valve 12 by means of pair of screws 29, 30.

In what follows, there are described the steps of assembly of the refrigeration circuit 1 in the motor vehicle 2.

In the first place, the condenser 5 and the expansion valve 12 are installed in the engine compartment 6.

Prior to installation of the engine 4, the flange 21 of the connection means 20 is fixed by means of the screws 29 and 30 to the expansion valve 12, whilst the free end of the liquid pipe 10 is connected to the condenser 7.

Next, the engine 4 is installed, which carries the compressor 3, to which a first end portion of the intake pipe 19 is connected. Assembly is completed via mere snap-action connection of the fast-coupling element 28 carried by the intake pipe 19 on the fast-coupling element 27 of the connection means 20.

From an examination of the characteristics of the refrigeration circuit 1 built according to the present invention, and in particular of the connection means 20, the advantages that said invention renders possible emerge clearly.

The use of a connection means 20 built according to the present invention enables the elimination of complex operations of assembly and, at the same time, containment of the risks of leakage of fluid.

In particular, the connection means 20 itself may be connected to the expansion valve 12 before the engine 4 of the motor vehicle 2 is installed in the engine compartment 6, and thus enables a fast and convenient connection of the intake pipe 19, which necessarily has to be installed subsequently.

As compared to the known solution, in which the pipes 10 and 19 are installed separately, each with a fixing flange of its own, the connection means 20 consequently requires a single screwed assembly of the flange 21 in a step in which the engine is not yet installed, and hence there are no problems of space.

In addition, as compared to the known solution, which comprises an intermediate flange provided with two fast-coupling elements for the respective pipes, the connection means 20 according to the invention presents the advantage of not requiring management of a separate additional component and of having just three possible leakage points.

Finally, from the foregoing it is evident that modifications and variations may be made to the connection assembly 20 described herein, without departing from the scope of protection of the present invention.

The connection means 20 may moreover comprise different types of fast coupling.

## Claims

1. A refrigeration circuit (1) of an air-conditioning system for a motor vehicle (2), comprising: a first pipe (10); a second pipe (19); a component (12) of said circuit, which is provided with a pair of connection inlets (23, 26); connection means (20) comprising a flange (21) for connecting said first pipe (10) and said second pipe (19) to the respective said inlets of said component (12), said first pipe (10) being rigidly fixed to said flange and having an end portion (22) mounted so that it passes through said flange so as to engage a respective said inlet (23); and a pipe fitting (24), which is carried by said flange and comprises an end portion (25) designed to engage a respective said inlet of said component, the circuit being **characterized in that** said pipe fitting (29) comprises at an opposite end, a fast-coupling element (27) for engagement with a corresponding fast-coupling element (28) carried by said second pipe (19) and wherein said component (12) is an expansion valve (12), said first pipe (10) is a pipe for liquid (10), which can be connected to a condenser (5) of said circuit (1), and **in that** said second pipe (19) is an intake pipe (19), which can be connected to a compressor (3) of said circuit (1).

2. The circuit according to Claim 1, **characterized in that** said pipe fitting (24) is mounted so that it passes through said flange (21).

3. The circuit according to Claim 1 or Claim 2, **characterized in that** said pipe fitting (24) is elbow-shaped, and **in that** said fast-coupling element (27) has an axis parallel to said flange (21).

4. The circuit according to any one of the preceding claims, **characterized in that** said fast-coupling element (27) of said pipe fitting (24) comprises an annular projection (31).

5. A connection assembly according to Claim 2, **characterized in that** said flange (21) comprises at least one hole engaged by a respective screw (29, 30) for fixing the flange (21) itself to said component (12).

6. A method for connection of a pipe for liquid (10) and of an intake pipe (19) to an expansion valve (12) of a refrigeration circuit (1) of an air-conditioning system of a motor vehicle, comprising the steps of:
- mounting one end of said pipe for liquid (10) through a flange (21);
- fixing to said flange (21) a tubular pipe fitting (24) provided with an end portion (25) for connection with said component (12) and with a fast-coupling element (27) designed for engagement with a corresponding fast-coupling element (28) carried by the intake pipe (19) ;
- fixing said flange (21) to said expansion valve (12) so that said end portion (22) of said pipe for liquid (10) and said end portion (25) of said pipe fitting (24) will engage respective inlets (23, 26) of the expansion valve (12) itself; and
- coupling the fast-coupling element (28) of said intake pipe (19) to the fast-coupling element (27) of said pipe fitting (24).

## Patentansprüche

1. Kühlkreislauf (1) für die Klimaanlage eines Kraftfahrzeugs (2), mit: einem ersten Rohr (10); einem zweiten Rohr (19); einer Komponente (12) des Kreislaufs, die mit einem Paar von Verbindungseinlässen (23,26) versehen ist; Verbindungsvorrichtungen (20) zum Verbinden des ersten Rohrs und des zweiten Rohrs (19) mit dem jeweiligen Einlass der Komponente (12), wobei die Verbindungsvorrichtung einen Flansch aufweist, der so ausgebildet ist, dass er fest an der Komponente anbringbar ist, wobei das erste Rohr (10) fest an dem Flansch angebracht ist und einen Endteil (22) aufweist, der so befestigt ist, dass er durch den Flansch verläuft, um mit einem betreffenden Einlass (23) zusammenzugreifen; und mit einem Rohr-Fitting (24), der von dem Flansch gehalten ist und einen Endteil (25) aufweist, der zum Zusammengriff mit einem betreffenden Einlass der Komponente ausgebildet ist, wobei die Schaltung **dadurch gekennzeichnet ist, dass** der Rohr-Fitting (24) an einem gegenüberliegenden Ende ein Schnellverbindungselement (27) zum Zusammengriff mit einem entsprechenden Schnellverbindungselement (28) aufweist, das von dem zweiten Rohr (19) gehalten ist, und dass die Komponente (12) ein Expansionsventil (12) ist, das erste Rohr (10) ein Flüssigkeitsrohr (10) ist, das mit einem Kondensator (5) des Kreislaufs (1) verbunden werden kann, und dass das zweite Rohr (19) ein Einlassrohr (19) ist, das mit einem Kompressor (3) des Kreislaufs (1) verbunden werden kann.

2. Kreislauf nach Anspruch 1, **dadurch gekennzeichnet, dass** der Rohr-Fitting (24) derart angeordnet ist, dass er durch den Flansch (21) hindurchtritt.

3. Kreislauf nach Anspruch 1 oder Anspruch 2, **dadurch gekennzeichnet, dass** der Rohr-Fitting (24) ellbogenförmig ist und dass das Schnellverbindungselement (27) eine parallel zu dem Flansch (21) verlaufende Achse hat.

4. Kreislauf nach einem der vorhergehenden Ansprüche, **dadurch gekennzeichnet, dass** das Schnellverbindungselement (27) des Rohr-Fittings (24) einen ringförmigen Vorsprung (31) aufweist.

5. Verbindungsvorrichtung nach Anspruch 2, **dadurch gekennzeichnet, dass** der Flansch (21) mindestens ein Loch aufweist, in das eine entsprechende Schraube (29,30) eingreift, um den Flansch (21) selbst an der Komponente (12) zu befestigen.

6. Verfahren zum Verbinden eines ersten Flüssigkeitsrohrs (10) und eines Einlassrohrs (19) mit einem Expansionsventil (12) eines Kühlkreislaufs (1) einer Klimaanlage eines Kraftfahrzeugs, mit folgenden Schritten:
- Hindurchführen eines Endes des Flüssigkeitsrohrs (10) durch einen Flansch (21);
- Befestigen eines rohrförmigen Rohr-Fittings (24) an dem Flansch (21), wobei der Rohr-Fitting mit einem Endteil (25) zum Zusammengriff mit der Komponente (12) und mit einem Schnellverbindungselement (27) versehen ist, das zum Zusammengriff mit einem entsprechenden Schnellverbindungselement (28) ausgebildet ist, welches von dem Einlassrohr (19) gehalten ist;
- Befestigen des Flansches (21) an dem Expansionsventil (12) derart, dass der Endteil (25) des Flüssigkeitsrohrs (10) und der Endteil (25) des Rohr-Fittings (24) mit jeweiligen Einlässen (23,26) des Expansionsventils (12) zusammengreifen; und
- Verbinden des Schnellverbindungselements (28) des Einlassrohrs (19) mit dem Schnellverbindungselement (27) des Rohr-Fittings (24).

## Revendications

1. Circuit frigorifique (1) d'un système de climatisation pour un véhicule automobile (2), comprenant : un premier tuyau (10) ; un second tuyau (19) ; un élément (12) dudit circuit, qui est pourvu d'une paire d'entrées de raccordement (23, 26) ; des moyens de raccordement (20) comprenant une bride pour raccorder le premier tuyau (10) et ledit second tuyau (19) auxdites entrées respectives de l'élément (12), le premier tuyau (10) étant rigidement fixé à une bride et possédant une partie terminale (22) montée de telle sorte qu'elle traverse ladite bride de manière à engager une entrée respective (23) ; et un raccord de tuyau (24), qui est porté par ladite bride et comprend une partie terminale (25) conçue pour engager une entrée respective dudit élément, le circuit étant **caractérisé en ce que** le raccord de tuyau (24) comprend, à une extrémité opposée, un élément d'accouplement rapide (27) destiné à s'engager avec un élément d'accouplement rapide correspondant (28) porté par le second tuyau (19), sachant que l'élément (12) est une soupape d'expansion (12), que le premier tuyau (10) est un tuyau pour liquide (10) qui peut être raccordé à un condenseur (5) du circuit (1), et que le second tuyau (19) est un tuyau d'admission (19) qui peut être raccordé à un compresseur (3) du circuit (1).

2. Circuit selon la revendication 1, **caractérisé en ce que** le raccord de tuyau (24) est monté de telle sorte qu'il traverse ladite bride (21).

3. Circuit selon la revendication 1 ou 2, **caractérisé en ce que** le raccord de tuyau (24) est en forme de coude, et **en ce que** l'élément d'accouplement rapide (27) possède un axe parallèle à ladite bride (21).

4. Circuit selon l'une quelconque des revendications précédentes, **caractérisé en ce que** ledit élément d'accouplement rapide (27) dudit raccord de tuyau (24) comprend une saillie annulaire (31).

5. Ensemble de raccordement selon la revendication 2, **caractérisé en ce que** ladite bride (21) comprend au moins un orifice engagé par une vis respective (29, 30) pour fixer la bride (21) elle-même à l'élément (12).

6. Procédé de raccordement d'un tuyau pour liquide (10) et d'un tuyau d'admission (19) à une soupape d'expansion (12) d'un circuit frigorifique (1) d'un système de climatisation d'un véhicule automobile, comprenant les étapes consistant à :
- monter une extrémité dudit tuyau pour liquide (10) à travers une bride (21) ;
- fixer à ladite bride (21) un raccord de tuyau tubulaire (24) doté d'une partie terminale (25) pour le raccordement audit élément (12) et d'un élément d'accouplement rapide (27) conçu pour s'engager avec un élément d'accouplement rapide correspondant (28) porté par le tuyau d'admission (19) ;
- fixer ladite bride (21) à la soupape d'expansion (12), de sorte que ladite partie terminale (22) dudit tuyau pour liquide (10) et ladite partie terminale (25) dudit raccord de tuyau (24) engageront des entrées de raccordement respectives (23, 26) de la soupape d'expansion (12) elle-même ; et
- accoupler l'élément d'accouplement rapide (28) dudit tuyau d'admission (19) à l'élément d'accouplement rapide (27) dudit raccord de tuyau (24).
